# EUROPÄISCHE PATENTSCHRIFT

(11) **EP 3 081 706 B1**
(45) Veröffentlichungstag und Bekanntmachung des Hinweises auf die Patenterteilung: **25.03.2020**
(21) Anmeldenummer: 15001142.7
(22) Anmeldetag: 18.04.2015
(51) Int. Cl.: E04B 1/41, F16B 37/04

(54) **ANKERSCHIENE ZUR VERANKERUNG IM BETON**
ANCHOR RAIL FOR ANCHORING IN CONCRETE
RAILS D'ANCRAGE DANS LE BÉTON

(43) Veröffentlichungstag der Anmeldung: 19.10.2016
(73) Patentinhaber: HALFEN GmbH, 40764 Langenfeld (DE)
(72) Erfinder: Albartus, Dirk, D-44795 Bochum (DE); Häusler, Frank, D-40217 Düsseldorf (DE); Borgstede, Dirk, D-42799 Leichlingen (DE); Hanke, Andreas, D-42799 Leichlingen (DE)
(74) Vertreter: Reinhardt, Annette

(56) Entgegenhaltungen:
- DE-A1- 10 014 977
- DE-A1-102009 041 654

## Beschreibung

Die vorliegende Erfindung betrifft eine Ankerschiene der im Oberbegriff des Anspruchs 1 angegebenen Gattung.

Eine gattungsgemäße Ankerschiene ist aus der DE 197 18 230 B4 bekannt. Derartige Ankerschienen werden in Beton eingegossen, um dann daran Gegenstände mit Hilfe von Schienenmuttern, Hintergreifteilen, Kopf- oder Hammerkopfschrauben befestigen zu können. Gemeinsam mit solchen Befestigungselementen bildet die Ankerschiene ein Befestigungssystem. Die Gewichtskraft der Befestigungsgegenstände wird über die Schienengeometrie und die Anker der Ankerschiene in den Beton übertragen. Neben einem möglichen Versagen der Befestigung der Ankerschiene im Beton ist ein Versagen des Materials der Ankerschiene selbst die größte Unsicherheitsquelle für ein ankerschienenbasiertes Befestigungssystem. Unter Belastung durch die Gewichtskraft eines an einer Ankerschiene befestigten Gegenstandes oder durch andere Kräfte ist die Verbindungsstelle von Anker und Schiene der Ankerschiene einer großen Belastung ausgesetzt. Über die Schenkel und die Seitenwände der Ankerschiene wird ein Teil der Gewichtskraft auf den Boden der Ankerschiene übertragen. Dies kann zu einer Deformierung der Ankerschiene führen, wobei typischerweise der Bereich der Verbindung von Anker und Boden der größten Belastung ausgesetzt ist und der Boden an der Verbindungsstelle zwischen Boden und Anker unter dieser Belastung ausreißen kann. Unter einer solchen Trennung von Anker und Boden leidet die Stabilität der gesamten Ankerschiene und die Stabilität ihrer Befestigung.

Aus der DE 10 2009 041 654 A1 geht eine Ankerschiene hervor, die an der Außenseite ihres Grundkörpers Rissinitiatormittel aufweist, die in Form von Verdickungen ausgeführt sind. Dadurch soll bei Belastung durch Querkräfte anstatt eines Risses die Erzeugung von zwei Rissen bewirkt werden.

Die DE 100 14 977 A1 zeigt eine Profilschiene, die keine Ankerbolzen besitzt. An ihren Seitenwänden weist die Profilschiene Haltevertiefungen auf.

Aufgabe der Erfindung ist es, eine gattungsgemäße Ankerschiene derart weiterzubilden, dass auf sie im einbetonierten Zustand übertragene Kräfte die Stabilität der Ankerschiene weniger stark beeinflussen.

Die Aufgabe wird durch eine Ankerschiene mit den Merkmalen des Anspruchs 1 gelöst.

Hierzu ist vorgesehen, dass der Grundkörper an seiner dem Beton zugewandten Außenseite zumindest teilweise eine Profilierung aufweist. Die Profilierung ist durch Ausnehmungen im Grundkörper realisiert. Hierbei sind die freien Schenkel an den Innenseiten des U-förmigen Grundkörpers an der offenen Seite des U-förmigen Grundkörpers angeordnet. Beim Einbetonieren der Ankerschiene ist vorgesehen, dass lediglich die Anker selbst und die Außenseiten des U-förmigen Grundkörpers mit dem Beton in Kontakt kommen. Die dem U-Bogen des U-förmigen Grundkörpers gegenüberliegenden Stirnseiten des U-förmigen Grundkörpers bilden dabei mit der Betonoberfläche typischerweise eine bündige ebene Fläche.

Es ist vorgesehen, dass der Grundkörper im Bereich der Profilierung verdickt ist. Die Dicke des Grundkörpers im Bereich der verdickten Profilierung entspricht der größten Wandstärke des Grundkörpers im Bereich der verdickten Profilierung. Die Dicke des Grundkörpers im unverdickten Bereich des Grundkörpers entspricht der Wandstärke des Grundkörpers im unverdickten Bereich des Grundkörpers. Die Dicke des Grundkörpers im Bereich der verdickten Profilierung ist größer als die Dicke des Grundkörpers im unverdickten Bereich des Grundkörpers. Dadurch ist die Verringerung der Stabilität des Grundkörpers im Bereich der Profilierung durch die mit der Profilierung verbundenen Materialausnehmungen geringer oder nicht vorhanden.

Durch die Profilierung der dem Beton zugewandten Außenseite des Grundkörpers wird die Oberflächenrauigkeit der Oberfläche der Außenseite des U-förmigen Grundkörpers erhöht. Dadurch wird einerseits die gemeinsame Kontaktfläche von Beton und Grundkörper vergrößert; andererseits greifen Beton und Grundkörper in den Bereichen der Profilierung ineinander. Durch die Vergrößerung der gemeinsamen Kontaktfläche ergibt sich eine bessere Haftung der Ankerschiene im Beton. Durch die Ausbildung einer Profilierung an der außenseitigen Oberfläche des U-förmigen Grundkörpers weist die Oberfläche des Grundkörpers im Bereich der Profilierung Vertiefungen bzw. Erhebungen auf, die gemeinsam eine Oberflächenstruktur bilden. Beim Eingießen der Ankerschiene in Beton wird diese Struktur als Negativ im Beton abgebildet. Nach dem Trocknen und Erstarren des Betons greifen die Erhebungen der Profilierung des Grundkörpers in die zugehörigen negativen Vertiefungen des Betons ein. Dadurch verhakt sich die Ankerschiene im Beton. Auch über die Verhakung der Ankerschiene im Beton durch die Profilierung können Kräfte von der Ankerschiene in den Beton übertragen werden. Durch die Profilierung des Grundkörpers der Ankerschiene können Kräfte nicht nur über den Anker der Ankerschiene direkt in den Beton übertragen werden, sondern auch über den Grundkörper selbst. Dadurch wird die Verbindungsstelle von Anker und Grundkörper weniger stark belastet. Auf die Ankerschiene wirkende Kräfte werden gleichmäßiger von der Ankerschiene auf den Beton übertragen. Dadurch wird die Stabilität der Ankerschiene bei der Aufnahme von Kräften weniger stark beeinflusst.

Vorteilhaft ist vorgesehen, dass sich die Profilierung der Ankerschiene über 30% bis 100% der Längserstreckung der Ankerschiene erstreckt. Insbesondere ist vorgesehen, dass sich die Profilierung der Ankerschiene über 70% bis 100% der Längserstreckung der Ankerschiene erstreckt. Insbesondere bei Nutzung der gesamten Längserstreckung für die Anordnung einer Profilierung an der Außenseite des Grundkörpers werden auf die Ankerschiene wirkende Kräfte besonders gleichmäßig von der Ankerschiene auf den Beton übertragen. Die damit verbundene Reduzierung der Belastung der Verbindungsstelle zwischen Anker und Grundkörper erhöht die Stabilität der Ankerschiene. Dies führt zu einer größeren Langlebigkeit der Ankerschiene und einer größeren maximal tolerierten Traglast, die von einer einbetonierten Ankerschiene getragen werden kann.

Vorteilhaft sind die Ausnehmungen grubenähnliche Vertiefungen auf der Außenseite des Grundkörpers der Ankerschiene. Vorteilhaft weisen die Ausnehmungen an der außenseitigen Oberfläche des Grundkörpers einen kreisförmigen Querschnitt auf. Beim Einbetonieren einer Ankerschiene mit durch Ausnehmungen realisierter Profilierung entstehen nockenartige aus dem Beton hervorstehende negative Erhebungen, die in die Ausnehmungen der Ankerschiene eingreifen. Ein großer Vorteil einer mittels Ausnehmungen realisierten Profilierung besteht darin, dass die aus dem Beton nockenartig hervorstehenden negativen Erhebungen des Betons Kräfte aufnehmen können, die in beliebiger Richtung innerhalb der Oberflächenebene des Grundkörpers um die zugehörige Ausnehmung der Profilierung herum orientiert sein können. Insbesondere werden über die Ausnehmung im Grundkörper der Ankerschiene und die zugehörige nockenartige negative Erhebung des Betons durch Ausnehmungen, deren Vertiefungsrichtung nicht ausschließlich parallel zur Längsrichtung der Anker der Ankerschiene orientiert ist, auch Kräfte von der Ankerschiene auf den Beton übertragen, die in Richtung der Längsrichtung des Ankers wirken. Gleichzeitig können so aber auch Kräfte direkt von den Ausnehmungen des Grundkörpers in den Beton übertragen werden, die in Längsrichtung der Ankerschiene wirken. Dadurch wird die Stabilität der Ankerschiene im Beton stark erhöht. Dies ist auch mit einer Steigerung der maximal tolerierten Traglast verbunden. Vorteilhaft sind die Ausnehmungen in regelmäßigen Abständen zueinander auf der Außenseite des Grundkörpers angeordnet. Dies ermöglicht eine gleichmäßige Belastung der Ankerschiene im gesamten Bereich der Profilierung durch die Übertragung von Kräften von der Ankerschiene in den Beton. Vorteilhaft beträgt die Tiefe der Ausnehmungen ungefähr ein Drittel der Wandstärke des Grundkörpers. Es kann aber auch vorgesehen sein, dass die Tiefe der Ausnehmungen ungefähr der Hälfte der Wandstärke des Grundkörpers im unprofilierten Bereich entspricht.

Vorteilhaft ist vorgesehen, dass die Dicke des Grundkörpers im Bereich der Profilierung des Grundkörpers und die Tiefe der Profilierung so aufeinander abgestimmt sind, dass die Differenz zwischen der Dicke des Grundkörpers im Bereich der Profilierung und der Tiefe der Profilierung der Dicke des Grundkörpers im unverdickten, unprofilierten Bereich des Grundkörpers entspricht. Mit Dicke des Grundkörpers im Bereich der Profilierung des Grundkörpers wird hier die größte Wandstärke des Grundkörpers im Bereich der Profilierung des Grundkörpers bezeichnet. Die Erhebungen der Profilierung werden also bei der Bestimmung der Dicke des Grundkörpers im Bereich der Profilierung berücksichtigt. Durch die beschriebene Abstimmung der Dicke des Grundkörpers im Bereich der Profilierung des Grundkörpers und der Tiefe der Profilierung aufeinander ist der Grundkörper in Bereichen der Profilierung mindestens genauso stabil wie in unprofilierten Bereichen. Ohne Berücksichtigung der Erhebungen der Profilierung entspricht die Dicke des Grundkörpers im Bereich der Profilierung der Dicke des Grundkörpers im unprofilierten, unverdickten Bereich des Grundkörpers.

In einer weiteren vorteilhaften Weiterbildung der Erfindung ist vorgesehen, dass die Dicke des Grundkörpers im Bereich der Profilierung des Grundkörpers und die Tiefe der Profilierung so aufeinander abgestimmt sind, dass die Differenz zwischen der Dicke des Grundkörpers im Bereich der Profilierung und der Tiefe der Profilierung kleiner als die Dicke des Grundkörpers im unverdickten Bereich des Grundkörpers ist. Ohne Berücksichtigung der Erhebungen der Profilierung ist die Dicke des Grundkörpers im Bereich der Profilierung also kleiner als die Dicke des Grundkörpers im unprofilierten, unverdickten Bereich des Grundkörpers. Dennoch kann die Stabilität des Grundkörpers im profilierten und im unprofilierten Bereich dieselbe sein, da auch das Material der Erhebungen zur Stabilität des Grundkörpers im Bereich der Profilierung beiträgt. So kann bei gleichbleibender Stabilität des Grundkörpers Material eingespart werden, da die Verdickung mit kleinerer Wandstärke ausgeführt ist.

In vorteilhafter Weiterbildung der Erfindung ist vorgesehen, dass der Grundkörper zumindest zwei Seitenwände umfasst, und dass die Profilierung an zumindest einer Seitenwand zumindest über eine Teilprofilierungshöhe der Seitenwand über zumindest einen Teil der Längserstreckung der Ankerschiene als Seitenwandprofilierung angeordnet ist. Da die Seitenwände nicht ausschließlich orthogonal zu den Ankern der Ankerschiene angeordnet sind, können bei entsprechender Anordnung der Seitenwandprofilierung auch Kräfte von der Ankerschiene in den Beton übertragen werden, die im Wesentlichen parallel zur Längsrichtung der Anker der Ankerschiene wirken. So wirkt die Seitenwandprofilierung einem Herausziehen der Ankerschiene aus dem Beton in Richtung parallel zur Längsrichtung der Anker der Ankerschiene entgegen. Die Seitenwandprofilierung kann aber auch so angeordnet sein, dass Kräfte von der Ankerschiene in den Beton übertragen werden, die in Längsrichtung der Ankerschiene wirken.

Vorteilhaft erstreckt sich die Seitenwandprofilierung über 30% bis 100% der gesamten Höhe der mindestens einen Seitenwand. Weiterhin vorteilhaft erstreckt sich die Seitenwandprofilierung über 70% bis 100% der gesamten Höhe der mindestens einen Seitenwand. Insbesondere erstreckt sich die Seitenwandprofilierung über die gesamte Höhe der mindestens einen Seitenwand. Dadurch werden auf die Ankerschiene wirkende Kräfte besonders gleichmäßig von der Ankerschiene in den Beton übertragen. Die damit verbundene Reduzierung der Belastung der Verbindungsstelle zwischen Anker und Grundkörper führt zu einer Erhöhung der Stabilität der Ankerschiene insgesamt. Dies führt zu einer erhöhten Langlebigkeit der Ankerschiene und zu einer größeren maximal tolerierten Traglast der Ankerschiene.

In weiterer vorteilhafter Weiterbildung der Erfindung ist vorgesehen, dass der Grundkörper einen Boden umfasst, dass der zumindest eine Anker an dem Boden angeordnet ist, und dass die Profilierung am Boden des Grundkörpers zumindest über eine Teilbreite des Bodens über zumindest einen Teil der Längserstreckung der Ankerschiene als Bodenprofilierung angeordnet ist. Als Breite des Bodens wird hier der Abstand der beiden gegenüberliegenden Seitenwände an den beiden Übergangsstellen zwischen Boden und Seitenwänden bezeichnet. Die Teilbreite, in der die Bodenprofilierung angeordnet ist, beträgt vorteilhaft zwischen 1% und 30% der gesamten Breite des Bodens. Weiterhin vorteilhaft beträgt die Teilbreite des Bodens, in der die Bodenprofilierung angeordnet ist, zwischen 5% und 20% der gesamten Breite des Bodens. Typischerweise ist der Kontakt der Ankerschiene zum Beton im Bereich des Bodens der Ankerschiene besonders gut. Aus diesem Grund können über eine Bodenprofilierung Kräfte besonders gut von der Ankerschiene in den Beton übertragen werden. Die Bodenprofilierung eignet sich insbesondere zur Übertragung von Kräften, die in Längsrichtung der Ankerschiene wirken, von der Ankerschiene in den Beton. Dadurch können beispielsweise Ankerschienen, deren Längsrichtung vertikal im Beton orientiert ist, auf stabilere Weise im Beton festgelegt werden. Hierbei wird insbesondere die Gewichtskraft eines an der Ankerschiene befestigten Gegenstandes gleichmäßiger von der Ankerschiene in den Beton übertragen. Die Übertragung findet nicht mehr ausschließlich über die Verbindungsstellen zwischen Grundkörper und Anker und die Anker selbst statt. Vielmehr kann hierfür zusätzlich die Bodenprofilierung des Grundkörpers genutzt werden. Dadurch werden die maximal tolerierte Traglast und die Stabilität der Ankerschiene erhöht.

In vorteilhafter Weiterbildung der Erfindung ist vorgesehen, dass sich die Bodenprofilierung über 30% bis 100% der gesamten Breite des Bodens erstreckt. Vorteilhaft erstreckt sich die Bodenprofilierung über 70% bis 100% der gesamten Breite des Bodens. Insbesondere vorteilhaft erstreckt sich die Bodenprofilierung über die gesamte Breite des Bodens. Dadurch werden auf die Ankerschiene wirkende Kräfte besonders gleichmäßig von der Ankerschiene auf den Beton übertragen. Die damit verbundene Reduzierung der Belastung der Verbindungsstellen zwischen Anker und Grundkörper führt zu einer Erhöhung der Stabilität der Ankerschiene insgesamt. Dies führt zu einer erhöhten Langlebigkeit der Ankerschiene und zu einer größeren maximal tolerierten Traglast der Ankerschiene.

In vorteilhafter Weiterbildung der Erfindung ist vorgesehen, dass der Grundkörper zwei Seitenwände und einen Boden umfasst, dass die Seitenwände senkrecht in Bezug auf den Boden angeordnet sind, dass die Seitenwände mit dem Boden Außenkanten bilden, dass die Seitenwände parallel zueinander verlaufen, und dass die dem Anker abgewandten Oberflächen der freien Schenkel auf gleicher Höhe an den dem Boden abgewandten Bereichen der Seitenwände senkrecht zu den Seitenwänden angeordnet sind. Durch die senkrechte Orientierung der dem Anker abgewandten Oberflächen der freien Schenkel zu den Seitenwänden können Kräfte, die in Richtung quer zur Längsrichtung der Ankerschiene und quer zur Längsrichtung der Anker auftreten, effizient über die senkrechten Seitenwände in den Beton abgeleitet werden. Hierbei werden die auftretenden Kräfte typischerweise zunächst über eine Kopfschraube und/oder die freien Schenkel auf die Seitenwände übertragen. Die senkrechte Orientierung der Seitenwände zum Boden ermöglicht weiterhin die Aufnahme von typischen Kopfschrauben in die Ankerschiene. Insbesondere ist die Querschnittsgeometrie einer so gefertigten Ankerschiene optimal auf den entsprechenden Querschnitt einer Hammerkopfschraube abgestimmt.

Vorteilhaft ist die Ankerschiene einteilig aus kaltgewalztem Stahl gefertigt. Dies trägt zu einer größeren Stabilität der Ankerschiene bei. Die erhöhte Festigkeit der Ankerschiene sorgt für eine Erhöhung der maximal tragbaren Traglast durch die Ankerschiene. Durch die erhöhte Festigkeit der Ankerschiene ist die Ankerschiene gegenüber einem Verbiegen der Ankerschiene bei Belastung durch beispielsweise die Gewichtskraft eines befestigten Gegenstands stabiler. Darüber hinaus ist eine Herstellung im Kaltwalzverfahren deutlich kostengünstiger und energiesparender als die Herstellung im Warmwalzverfahren. Auf diese Weise kann unter Einsatz einer kleineren Energiemenge eine stabilere Ankerschiene hergestellt werden.

Vorteilhaft weist die Ankerschiene zur Verankerung in Beton einen im Wesentlichen C-förmigen Querschnitt auf, wobei die Ankerschiene einen im Querschnitt im Wesentlichen U-förmigen Grundkörper, zwei freie Schenkel und mindestens einen Anker umfasst, wobei der Grundkörper einen Boden und zwei Seitenwände umfasst, wobei die zwei freien Schenkel gegenüberliegend dem Boden des Grundkörpers angeordnet sind, wobei der zumindest eine Anker an dem Boden angeordnet ist, wobei zwischen den freien Schenkeln ein Schlitz in Längsrichtung der Ankerschiene gebildet ist. Vorteilhaft ist die Ankerschiene dadurch gekennzeichnet, dass die Ankerschiene mindestens eine Verdickung am Grundkörper aufweist.

Vorteilhaft weist die Ankerschiene zur Verankerung in Beton einen im Wesentlichen C-förmigen Querschnitt auf, wobei die Ankerschiene mindestens einen Anker, zwei Seitenwände und zwei gegenüberliegende freie Schenkel umfasst, wobei zwischen den freien Schenkeln ein Schlitz in Längsrichtung der Ankerschiene gebildet ist. Vorteilhaft ist die Ankerschiene dadurch gekennzeichnet, dass die freien Schenkel an ihrer dem Anker abgewandten Seite, und somit auch an der vorderen Außenseite der Ankerschiene bezogen auf die Längserstreckung, eine zumindest partielle Verzahnung besitzen.

Vorteilhaft kann die Ankerschiene als Teil eines Befestigungssystems zur Sicherung einer Kopfschraube innerhalb der in Beton zu befestigenden Ankerschiene genutzt werden. Vorteilhaft ist das Befestigungssystem dadurch gekennzeichnet, dass eine Rastungsplatte vorgesehen ist, die eine Verzahnung aufweist, dass die Rastungsplatte zwischen einem zu befestigenden Gegenstand und den freien Schenkeln der Ankerschiene angeordnet ist, und dass die Verzahnung der Rastungsplatte in Richtung der freien Schenkel der Ankerschiene zeigt und beim Befestigen des Gegenstandes mit Hilfe einer Befestigungsmutter in die Verzahnung der Schenkel eingreift.

Ausführungsbeispiele der Erfindung werden im Folgenden anhand der Zeichnung erläutert. Es zeigen:
- Fig. 1: eine perspektivische Darstellung einer nicht erfindungsgemäßen Ankerschiene,
- Fig. 2: eine Ansicht der nicht erfindungsgemäßen Ankerschiene aus Fig. 1 von einem Längsende der Ankerschiene aus in Richtung des Pfeils II in Fig. 1,
- Fig. 3: eine teilvergrößerte, schematische Teildarstellung einer Ansicht der nicht erfindungsgemäßen Ankerschiene aus Fig. 1 in Richtung des Pfeils III in Fig. 1,
- Fig. 4: eine perspektivische Darstellung einer nicht erfindungsgemäßen Ankerschiene,
- Fig. 5: eine Ansicht der nicht erfindungsgemäßen Ankerschiene aus Fig. 4 von einem Längsende der Ankerschiene aus in Richtung des Pfeils V in Fig. 4,
- Fig. 6 bis 19: schematische Teildarstellungen von Ansichten von Ankerschienen von einem Längsende aus in Längsrichtung der jeweiligen Ankerschiene ohne Darstellung der Anker, wobei Fig. 6 eine nicht erfindungsgemäße Ankerschiene zeigt,
- Fig. 20: eine perspektivische Darstellung einer Ankerschiene,
- Fig. 21: eine Ansicht der Ankerschiene aus Fig. 20 von einem Längsende der Ankerschiene aus in Richtung des Pfeils XXI in Fig. 20,
- Fig. 22: eine perspektivische Darstellung eines Befestigungssystems, die Ankerschiene aus Fig. 20 umfassend,
- Fig. 23: eine Ansicht des Befestigungssystems aus Fig. 22 von einem Längsende der Ankerschiene aus in Richtung des Pfeils XXIII in Fig. 22,
- Fig. 24: eine Explosionsdarstellung des Befestigungssystems aus den Figuren 22 und 23.

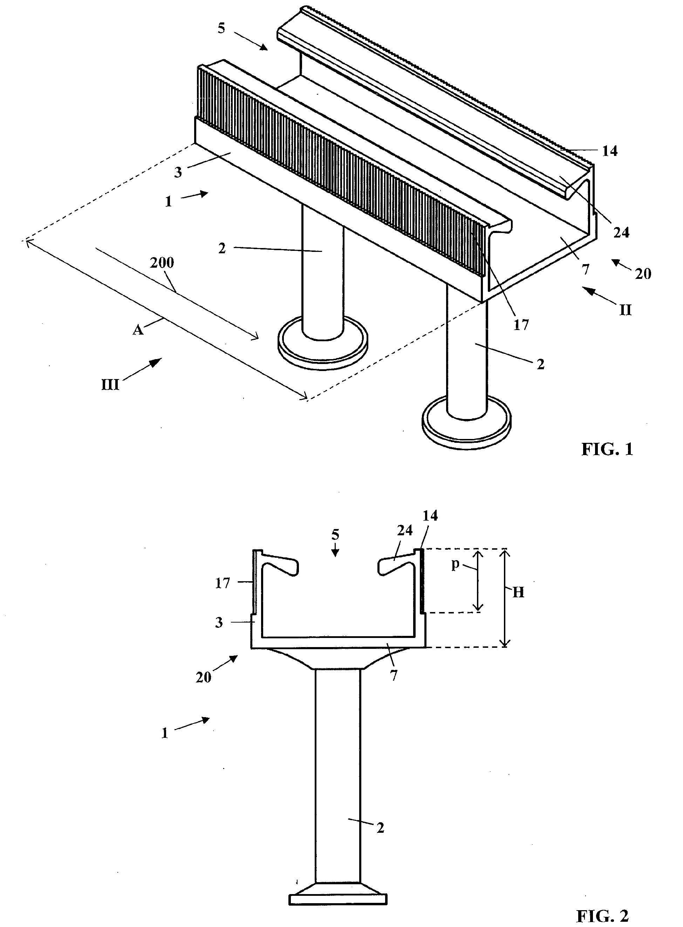

Fig. 1 zeigt die perspektivische Darstellung einer nicht erfindungsgemäßen Ankerschiene 1. Solche Ankerschienen werden beispielsweise in Beton eingegossen. Die Ankerschiene 1 besitzt einen im Wesentlichen C-förmigen Querschnitt. Zur Verankerung der Ankerschiene 1 im Beton sind Anker 2 vorgesehen. Die Anker 2 sind orthogonal zu einem ebenen Boden 7 der Ankerschiene 1 angeordnet. Die Anker 2 sind bezogen auf die Richtung quer zur Längsrichtung 200 der Ankerschiene 1 in der Mitte des Bodens 7 angeordnet. Orthogonal zum Boden 7 sind Seitenwände 3 angeordnet. Die zwei Seitenwände 3 verlaufen parallel zueinander. Die Seitenwände 3 bilden gemeinsam mit dem Boden 7 einen Grundkörper 20 der Ankerschiene 1, der einen im Wesentlichen U-förmigen Querschnitt besitzt. Die Seitenwände 3 bilden gemeinsam mit dem Boden 7 Außenkanten des Grundkörpers 20 der Ankerschiene 1. An dem dem Boden abgewandten Bereich der Seitenwände 3 sind auf gleicher Höhe freie Schenkel 24 angeordnet. Die Seitenwände 3 überragen die freien Schenkel 24. Der den Ankern 2 abgewandte Bereich der Seitenwände 3 ist bei beiden Seitenwänden 3 auf gleicher Höhe durch Stirnseiten 14 der Seitenwände 3 begrenzt.

Zwischen den beiden sich gegenüberliegenden Schenkeln 24 ist in Längsrichtung 200 der Ankerschiene 1 ein Schlitz 5 gebildet. In einer Ansicht der Ankerschiene 1 von einem Längsende der Ankerschiene 1 aus in Richtung entgegen der in Fig. 1 eingezeichneten Längsrichtung 200 zeigen die beiden Schenkel 24, wie in Fig. 2 dargestellt, ein hakenförmiges Profil. Die Wandstärke der Schenkel 24 nimmt von den Seitenwänden 3 der Ankerschiene 1 zum Schlitz 5 der Ankerschiene 1 hin zu. Die den Ankern 2 abgewandten Oberflächen der freien Schenkel 24 bilden mit den Seitenwänden einen Winkel größer als 270°.

Wie in den Fig. 1 und 2 zu erkennen, ist an den beiden Seitenwänden 3 des Grundkörpers 20 der Ankerschiene 1 eine Profilierung als Seitenwandprofilierung 17 angeordnet. Die Seitenwandprofilierung 17 erstreckt sich über 100 % der Längserstreckung A der Ankerschiene 1. Die Seitenwandprofilierung 17 erstreckt sich ausgehend von den dem Boden 7 abgewandten Stirnseiten 14 der Seitenwände 3 auf den im eingegossenen Zustand dem Beton zugewandten Außenseiten der Seitenwände 3 über eine Teilprofilierungshöhe p der Seitenwände 3. Die Teilprofilierungshöhe p der Seitenwand 3 beträgt ungefähr zwei Drittel der Gesamthöhe der Außenseite H der Seitenwand 3. Beide Höhen werden in Richtung der Längsrichtung des Ankers 2 der Ankerschiene 1 gemessen.

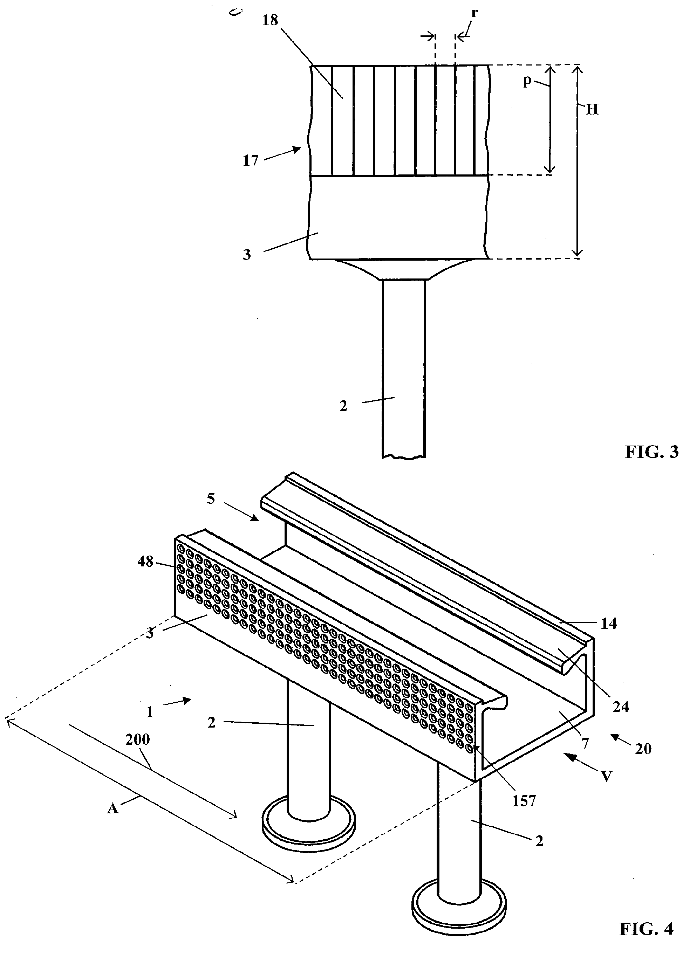

Fig. 3 zeigt in schematischer Darstellung eine teilvergrößerte Ansicht einer Längsseite der nicht erfindungsgemäßen Ankerschiene 1 in Richtung des Pfeils III in Fig. 1. Die Seitenwandprofilierung 17 ist durch Rillen 18 ausgeführt. Die Rillen 18 sind mit gleichem Abstand r zueinander angeordnet. Die Rillen 18 verlaufen in einem Winkel von 90° zur Längsrichtung 200 der Ankerschiene 1 und damit parallel zur Längsrichtung der Anker 2 der Ankerschiene 1.

Fig. 4 zeigt die perspektivische Darstellung einer nicht erfindungsgemäßen Ankerschiene 1, bei der die Profilierung als Seitenwandprofilierung 157 durch Ausnehmungen 48 in den Seitenwänden 3 des Grundkörpers 20 der Ankerschiene 1 realisiert ist. Die Ausnehmungen 48 der Seitenwandprofilierung 157 sind an der Außenseite der Seitenwand 3, die im verbauten Zustand der Ankerschiene 1 dem Beton zugewandt ist, angeordnet. Die Ausnehmungen 48 sind halbkugelförmige Ausnehmungen. Die einzelnen Ausnehmungen 48 haben denselben Abstand zueinander. Die aus den Ausnehmungen 48 bestehende Seitenwandprofilierung 157 erstreckt sich über 100% der Längserstreckung A der Ankerschiene 1.

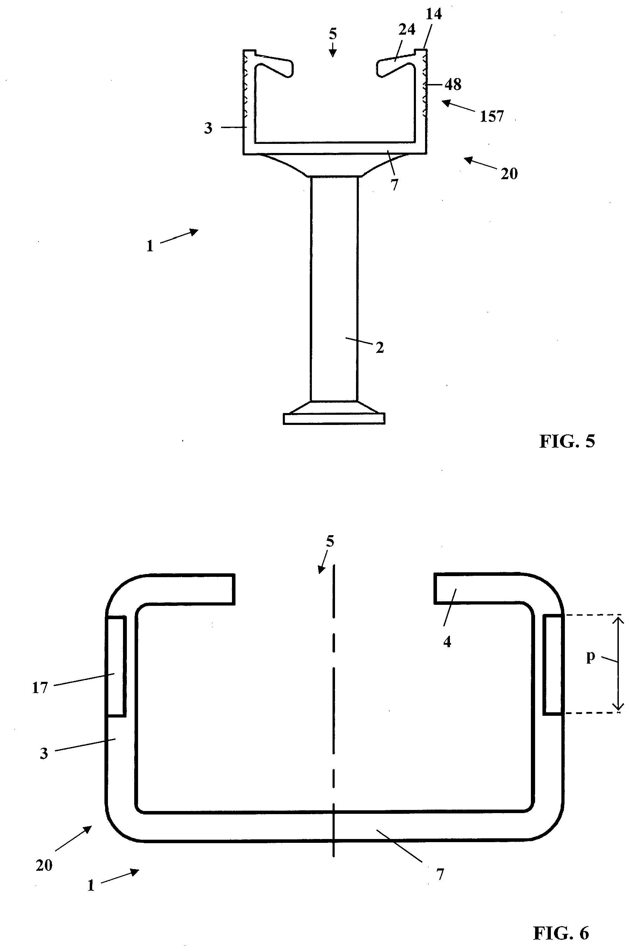

Fig. 5 zeigt eine Ansicht der nicht erfindungsgemäßen Ankerschiene 1 aus Fig. 4 von einem Längsende der Ankerschiene 1 aus in Richtung des Pfeils V in Fig. 4, also entgegen der in Fig. 4 eingezeichneten Längsrichtung 200 der Ankerschiene 1. Die Tiefe der halbkugelförmigen Ausnehmungen 28 der Seitenwandprofilierungen 157 beträgt ungefähr ein Drittel der Wandstärke der Seitenwände 3.

Die Fig. 6 bis 19 zeigen schematische Teildarstellungen von Ansichten von Ankerschienen 1 von einem Längsende aus in Längsrichtung der jeweiligen Ankerschiene 1. Auf die Darstellungen der Anker wurde in den Fig. 6 bis 19 verzichtet. Wie in allen Figuren sind auch in den Fig. 6 bis 19 sich entsprechende Teile mit gleichen Bezugszeichen bezeichnet.

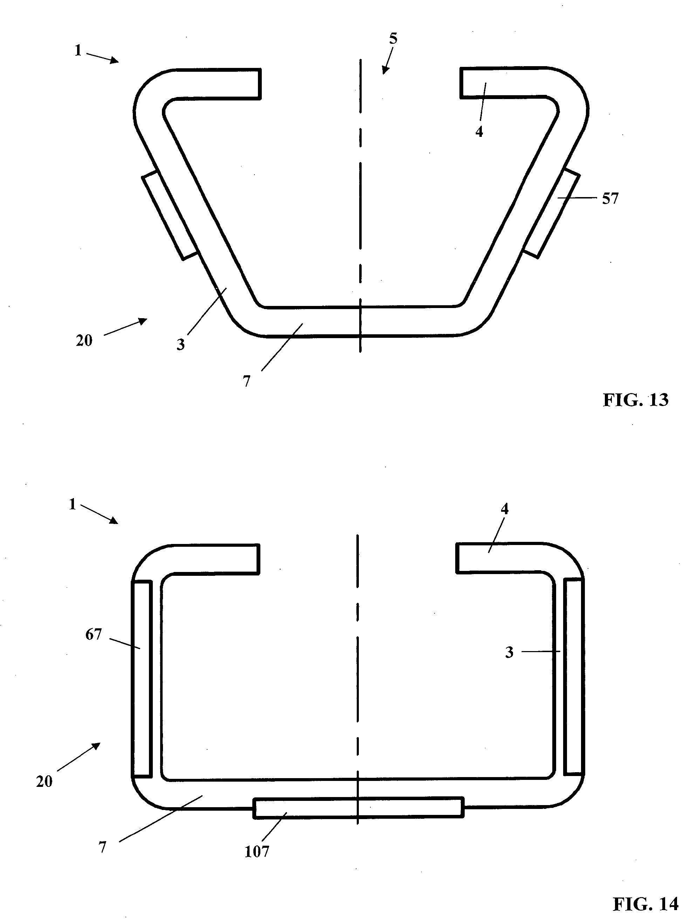

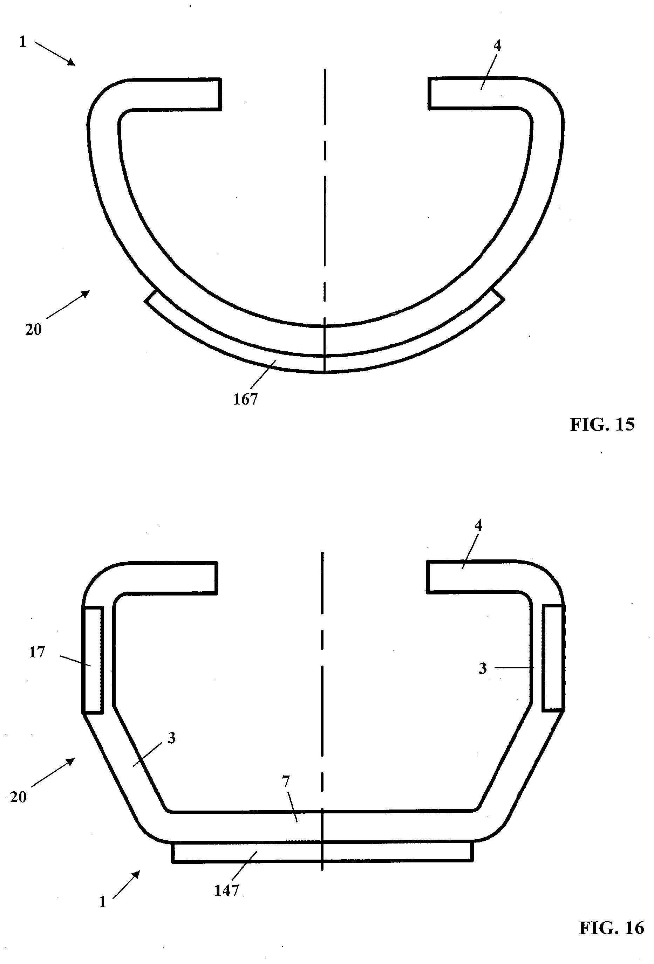

Bei den Ankerschienen 1 nach den Fig. 6 bis 12 und 14, 17, 18 und 19 sind die sich gegenüberliegenden Seitenwände 3 ausschließlich orthogonal zum Boden 7 angeordnet. Dabei bilden die Seitenwände 3 mit dem Boden 7 Außenkanten. Bei der Ankerschiene 1 nach Fig. 13 sind die beiden Seitenwände 3 eben ausgebildet und schließen mit dem Boden 7 einen Winkel > 90° ein. Bei der Ankerschiene 1 nach der Fig. 16 sind die beiden Seitenwände 3 nicht eben ausgebildet, sondern weisen ungefähr auf halber Höhe in Richtung der Längsrichtung des nicht abgebildeten Ankers einen Knick auf. Im weiter vom Boden 7 entfernten Bereich der Seitenwände 3 verlaufen die Seitenwände 3 orthogonal zum Boden 7. In dem dem Boden 7 näher liegenden Bereich der Seitenwände 3 schließen die Seitenwände 3 und der Boden 7 einen Winkel > 90° ein.

Die freien Schenkel 4, 24 der Ankerschienen 1 gemäß den Figuren 6 bis 10 und 12 bis 19 weisen eine im Verlauf von den Seitenwänden 3 zu dem Schlitz 5 hin unveränderlich gleiche Wandstärke auf. Für die Ankerschienen 1 gemäß den Figuren 6, 7, 9, 10, 12, 13, 14 und 16 bis 19 verlaufen die freien Schenkel 4 parallel zu dem ebenen Boden 7. Die freien Schenkel 4 der Ankerschiene 1 gemäß Fig. 15 sind im am weitesten von den Ankern entfernt liegenden Bereich der Seitenwände 3 im rechten Winkel von den Seitenwänden 3 abgeknickt. Für alle Ausführungsbeispiele gemäß den Figuren 6 bis 19 sind die sich gegenüberliegenden freien Schenkel 4, 24, 34 auf gleicher Höhe an dem dem Boden 7 oder dem dem nicht gezeigten Anker abgewandten Bereich der Seitenwände 3 angeordnet. Die freien Schenkel 4 der Ankerschienen 1 gemäß den Ausführungsbeispielen nach den Figuren 6, 7, 9, 10, 12, 14 und 17 bis 19 sind senkrecht zu den Seitenwänden 3 angeordnet. In Fig. 16 ist zumindest der an die Schenkel 4 angrenzende Teil der Seitenwände 3 der Ankerschiene 1 orthogonal zu den freien Schenkeln 4 orientiert. Die den nicht gezeigten Ankern abgewandten Oberflächen der Schenkel 4, 24 der Ankerschienen 1 gemäß den Ausführungsbeispielen nach den Figuren 6, 7, 9 bis 19 liegen in derselben Ebene.

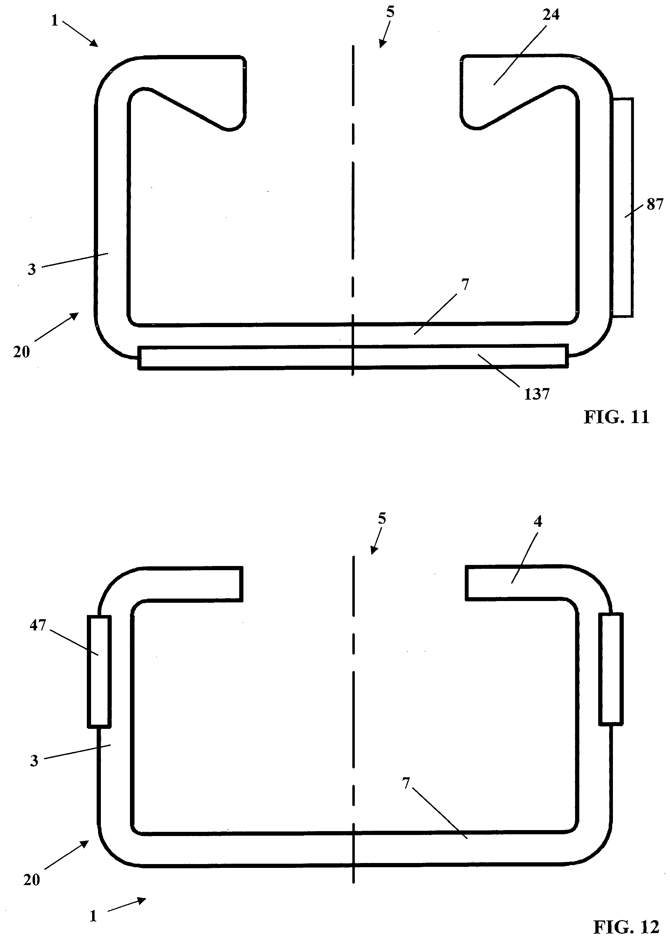

Die Wandstärke der Schenkel 24 der Ankerschiene 1 gemäß Fig. 11 nimmt von den Seitenwänden 3 der Ankerschiene zum Schlitz 5 der Ankerschiene hin zu.

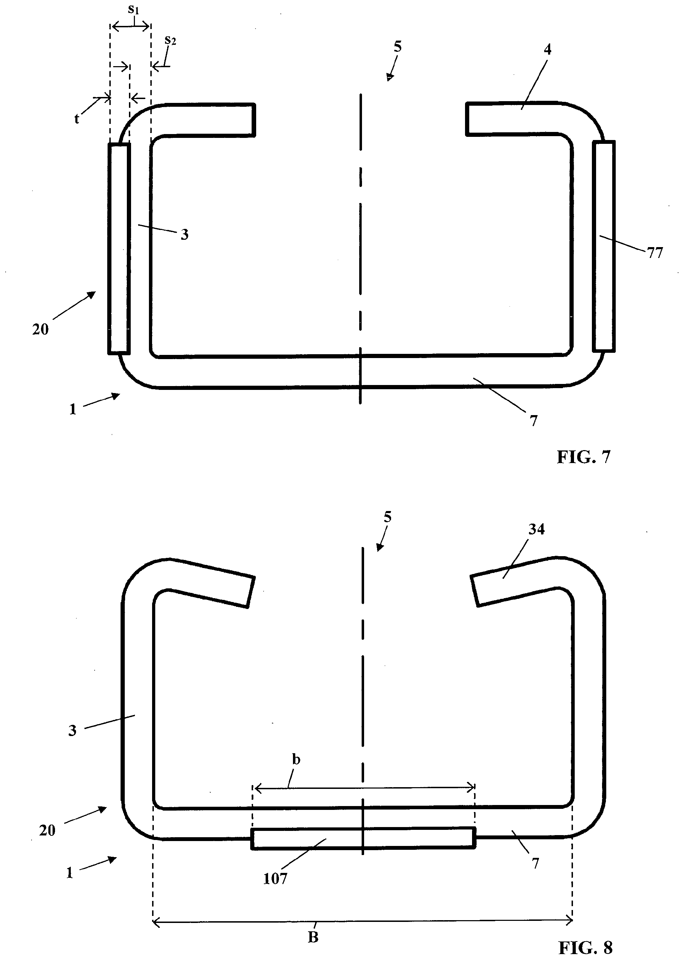

Die freien Schenkel 34 der Ankerschiene 1 gemäß Fig. 8 sind nach innen hin geknickt. Die freien Schenkel 34 bilden mit den Seitenwänden 3 einen Winkel < 90°. Der Abstand zwischen dem Bereich der freien Schenkel 34, der näher zum Schlitz 5 der Ankerschiene 1 hin liegt, und dem Boden 7 ist kleiner als der Abstand zwischen dem Bereich der freien Schenkel 34, der näher zu den Seitenwänden 3 hin liegt, und dem Boden 7.

In den Figuren 6 bis 19 sind die Bereiche des Grundkörpers 20, in denen eine Profilierung angeordnet ist, mit einem rechteckigen Kasten gekennzeichnet. Eine so gekennzeichnete Profilierung kann sowohl durch Rillen als auch durch Ausnehmungen ausgeführt sein. Die Längserstreckung der eingezeichneten Profilierungen in Längsrichtung der jeweiligen Ankerschiene 1 kann sich sowohl über einen Teil der Ankerschiene 1 als auch über die gesamte Längserstreckung der Ankerschiene 1 erstrecken. Alle der in den Figuren 6 bis 19 gezeigten Profilierungen sind an der Außenseite des Grundkörpers 20, die im verbauten Zustand der jeweiligen Ankerschiene 1 dem Beton zugewandt ist, angeordnet.

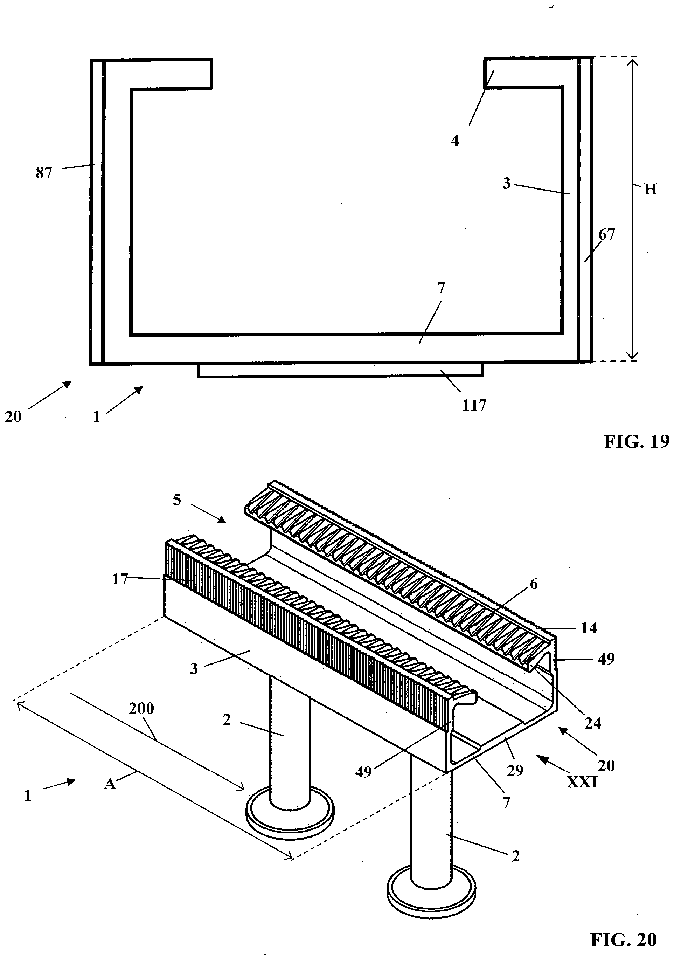

Die Figuren 6, 9, 14, 16, 17 und 19 zeigen Seitenwand- und Bodenprofilierungen 17, 67, 97, 127, die in den Grundkörper 20 eingelassen sind. Der Grundkörper 20 ist im Bereich der Seitenwand- und Bodenprofilierungen 17, 67, 97, 127 nicht verdickt. Solche Seitenwand- und Bodenprofilierungen 17, 67, 97, 127 werden im Folgenden als versenkt bezeichnet. Die Tiefe dieser Boden- und Seitenwandprofilierungen 17, 67, 97, 127 beträgt ungefähr die Hälfte der Wandstärke des Grundkörpers 20 der jeweiligen Ankerschiene 1. Die Figuren 6, 14, 16 und 19 zeigen versenkte Seitenwandprofilierungen 17, 67. Die Seitenwandprofilierung 67 der Figuren 14 und 19 erstreckt sich über die gesamte Höhe H der Seitenwände 3. Die gesamte Höhe H einer Seitenwand 3 ist exemplarisch in Fig. 19 eingezeichnet. Die gesamte Höhe H erstreckt sich vom Boden 7 bis zu den freien Schenkeln 4 einer Ankerschiene 1. Die Seitenwandprofilierung 17 der Figuren 6 und 16 erstreckt sich über eine Teilprofilierungshöhe p der Seitenwand 3. Die Teilprofilierungshöhe p einer Seitenwand 3 ist in Fig. 6 exemplarisch eingezeichnet. Für die Seitenwandprofilierungen 17 aus den Figuren 6 und 16 beträgt die Teilprofilierungshöhe p ungefähr die Hälfte der gesamten Höhe H einer Seitenwand 3.

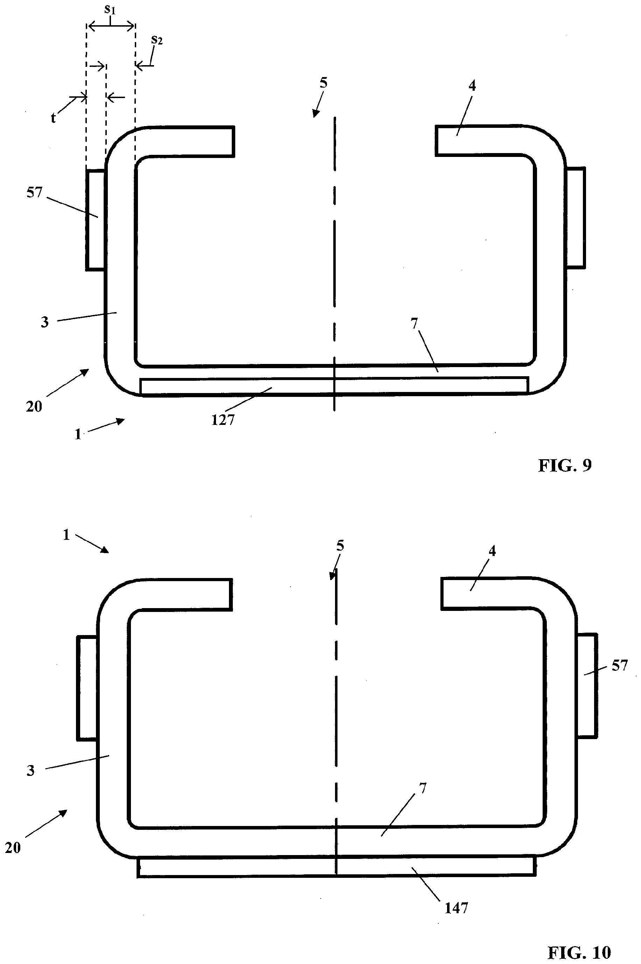

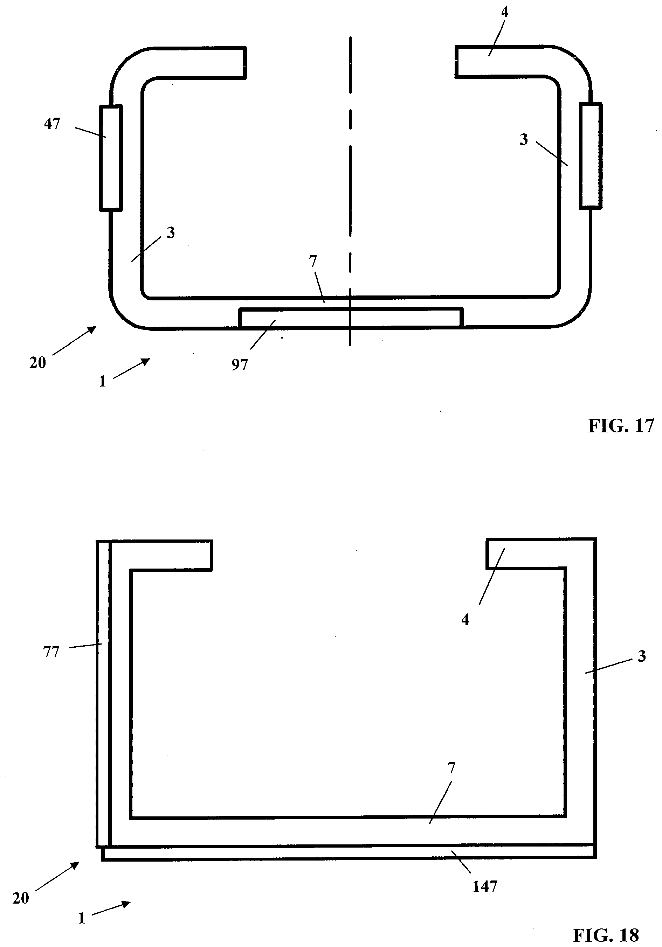

Die Fig. 9 und 17 zeigen versenkte Bodenprofilierungen 97, 127. Die Bodenprofilierungen 127 der Fig. 9 erstrecken sich über die gesamte Breite B des Bodens 7. Die gesamte Breite B des Bodens 7 entspricht dem Abstand der beiden sich gegenüberliegenden Innenseiten der Seitenwände 3 an der Verbindungsstelle zwischen Seitenwänden 3 und Boden 7. Die Größe der gesamten Breite B des Bodens 7 ist exemplarisch in Fig. 8 eingezeichnet. Die versenkte Bodenprofilierung 97 der Fig. 17 erstreckt sich über eine Teilbreite b des Bodens 7. Die Teilbreite b beträgt ungefähr die Hälfte der gesamten Breite B des Bodens 7 und ist exemplarisch in Fig. 8 eingezeichnet.

Die Figuren 7 bis 14 und 16 bis 19 zeigen Seitenwand- und Bodenprofilierungen 47, 57, 77, 87, 107, 117, 137, 147, bei denen der Grundkörper 20 der jeweiligen Ankerschiene 1 im Bereich der Profilierung verdickt ist. Die Dicke s1 des Grundkörpers 20 im Bereich dieser Boden- und Seitenwandprofilierungen 47, 57, 77, 87, 107, 117, 137, 147 ist exemplarisch in Fig. 7 und in Fig. 9 dargestellt. Die Dicke s₁ des Grundkörpers 20 im Bereich einer verdickten Profilierung entspricht der Wandstärke des Grundkörpers 20 im Bereich dieser verdickten Profilierung. Hierbei wird die größte Wandstärke des Grundkörpers 20 im Bereich der verdickten Profilierung ermittelt. Die Erhebungen der jeweiligen Profilierung werden also mit berücksichtigt. In Fig. 9 ist auch die Dicke s₂ des Grundkörpers 20 im unverdickten Bereich des Grundkörpers 20 eingezeichnet. Die Dicke s₂ des Grundkörpers 20 im unverdickten Bereich des Grundkörpers 20 entspricht der Wandstärke des Grundkörpers 20 im unverdickten Bereich des Grundkörpers 20.

Bei den Seitenwand- und Bodenprofilierungen 57, 87, 117, 147 aus den Fig. 9, 10, 11, 13, 16, 18 und 19 sind die Dicke s₁ des Grundkörpers 20 im Bereich der Profilierung des Grundkörpers 20 und die Tiefe t der Profilierung so aufeinander abgestimmt, dass die Differenz zwischen der Dicke s₁ des Grundkörpers 20 im Bereich der Profilierung und der Tiefe t der Profilierung der Dicke s₂ des Grundkörpers 20 im unverdickten Bereich des Grundkörpers 20 entspricht. Die Tiefe t der Seitenwand- und Bodenprofilierungen 17, 47, 57, 67, 77, 87, 97, 107, 117, 127, 137, 147 und 167 ist exemplarisch in Fig. 9 eingezeichnet. Die Tiefe t der verschiedenen Profilierungen wird jeweils senkrecht zur Seitenwand 3 oder zum Boden 7 des Grundkörpers 20 gemessen. Da die Seitenwand- und Bodenprofilierungen 57, 87, 117, 147 über die unverdickten Bereiche des Grundkörpers 20 in ihrer Gesamtheit hervorstehen, werden diese Profilierungen im Folgenden als vorstehend bezeichnet.

Die Figuren 9, 10, 11, 13 und 19 zeigen vorstehende Seitenwandprofilierungen 57, 87. Die Seitenwandprofilierungen 87 der Fig. 11 und 19 erstrecken sich über die gesamte Höhe H der Seitenwände 3. Die Seitenwandprofilierung 57 aus den Fig. 9, 10 und 13 erstreckt sich über die Teilprofilierungshöhe p der Seitenwand 3. Für die Seitenwandprofilierungen 57 aus den Fig. 9, 10 und 13 beträgt die Teilprofilierungshöhe p ungefähr die Hälfte der gesamten Höhe H der Seitenwand 3 der jeweiligen Ankerschiene 1.

Die Figuren 10, 16, 18 und 19 zeigen vorstehende Bodenprofilierungen 117, 147. Die vorstehenden Bodenprofilierungen 147 aus den Fig. 10, 16 und 18 erstrecken sich über die gesamte Breite B des Bodens 7 der jeweiligen Ankerschienen 1. Die vorstehenden Bodenprofilierungen 117 aus der Fig. 19 erstrecken sich über eine Teilbreite b der gesamten Breite B des Bodens 7 der Ankerschiene 1. Die Teilbreite b, über die sich die vorstehende Bodenprofilierung 117 erstreckt, beträgt ungefähr zwei Drittel der gesamten Breite B des Bodens 7 der Ankerschiene 1.

Die Figuren 7, 8, 11, 12,14, 17 und 18 zeigen Seitenwand- und Bodenprofilierungen 47, 77, 107, 137, bei denen die Dicke s₁ des Grundkörpers 20 im Bereich der verdickten Profilierung des Grundkörpers 20 und die Tiefe t der Profilierung so aufeinander abgestimmt sind, dass die Differenz zwischen der Dicke s₁ des Grundkörpers 20 im Bereich der Profilierung und der Tiefe t der Profilierung kleiner als die Dicke s₂ des Grundkörpers 20 im unverdickten Bereich des Grundkörpers 20 ist. Somit steht lediglich ein Teil der Seitenwand- und Bodenprofilierungen 47, 77, 107, 137 über die Dicke s₂ des Grundkörpers 20 im unverdickten Bereich des Grundkörpers 20 hervor. Aus diesem Grund werden die Seitenwand- und Bodenverdickungen 47 ,77 107, 137 im Folgenden als teilvorstehend bezeichnet.

Die Figuren 7, 12, 17 und 18 zeigen teilvorstehende Seitenwandprofilierungen 47, 77. Die Seitenwandprofilierungen 77 der Figuren 7 und 18 erstrecken sich über die gesamte Höhe H der Seitenwand 3 der jeweiligen Ankerschienen 1. Die Seitenwandprofilierungen 47 aus den Figuren 12 und 17 erstrecken sich über eine Teilhöhe p der gesamten Höhe H der Seitenwand 3 der jeweiligen Ankerschiene 1. Für die teilvorstehenden Seitenwandprofilierungen 47 aus den Fig. 12 und 17 beträgt die Teilhöhe p ungefähr die Hälfte der gesamten Höhe H der Seitenwände 3 der jeweiligen Ankerschiene 1.

Die Fig. 15 zeigt eine Ankerschiene 1 mit einem U-förmigen Grundkörper 20, der weder einen Boden noch Seitenwände umfasst. An den U-förmigen Grundkörper schließen sich die freien Schenkel 4 an. Die freien Schenkel 4 sind an den offenen Seiten des U-förmigen Grundkörpers 20 angeordnet. Die freien Schenkel 4 liegen einander gegenüber und sind einander zugewandt. Die freien Schenkel 4 liegen auf gleicher Höhe. Gegenüber den freien Schenkeln 4 sind nicht gezeigte Anker an der gegenüberliegenden Außenseite des Grundkörpers 20, an der geschlossenen Außenseite des U-förmigen Grundkörpers 20 angeordnet.

An dieser Außenseite des U-förmigen Grundkörpers 20 ist ebenso eine vorstehende Grundkörperprofilierung 167 angeordnet. Die vorstehende Grundkörperprofilierung 167 erstreckt sich über mehr als ein Drittel der kürzesten Verbindungslinie auf dem äußeren Umfang des U-förmigen Grundkörpers 20 von einem freien Schenkel 4 zum anderen freien Schenkel 4.

Die Fig. 20 zeigt die perspektivische Darstellung einer Ankerschiene 1. Zur Verankerung der Ankerschiene 1 in Beton sind Anker 2 vorgesehen. Die Anker 2 sind orthogonal zu einem ebenen Boden 7 angeordnet. Die Anker 2 sind bezogen auf die Richtung quer zur Längsrichtung 200 der Ankerschiene 1 in der Mitte des Bodens 7 angeordnet. Orthogonal zum Boden 7 der Ankerschiene 1 sind zwei Seitenwände 3 angeordnet. Die zwei Seitenwände 3 verlaufen parallel zueinander. Die Seitenwände 3 bilden gemeinsam mit dem Boden 7 Außenkanten des Grundkörpers 20 der Ankerschiene 1. Der Grundkörper 20 umfasst den Boden 7 und die beiden Seitenwände 3. An dem dem Boden 7 abgewandten Bereich der Seitenwände 3 sind auf gleicher Höhe freie Schenkel 24 angeordnet. Die Seitenwände 3 überragen die freien Schenkel 24. Der den Ankern 2 abgewandte Bereich der Seitenwände 3 ist bei beiden Seitenwänden 3 auf gleicher Höhe durch die Stirnseiten 14 der Seitenwände 3 begrenzt.

Zwischen den beiden sich gegenüberliegenden Schenkeln 24 ist in Längsrichtung 200 der Ankerschiene 1 ein Schlitz 5 gebildet. In einem Querschnitt quer zur Längsrichtung 200 der Ankerschiene 1 zeigen die beiden Schenkel 24 ein hakenförmiges Profil. Die Wandstärke der Schenkel 24 nimmt von den Seitenwänden 3 der Ankerschiene 1 zum Schlitz 5 der Ankerschiene 1 hin zu. Die den Ankern 2 abgewandten Oberflächen der freien Schenkel 24 bilden mit den Seitenwänden einen Winkel > 270°. Die den Ankern abgewandten Oberflächen der freien Schenkel 24 sind mit einer Verzahnung 6 versehen. Die Verzahnung 6 der freien Schenkel 24 ist quer zur Längsrichtung 200 der Ankerschienen 1 orientiert. Die den Ankern 2 abgewandte Seite der Schenkel 24 wird auch als vordere Außenseite der Ankerschiene 1 bezeichnet. Bezogen auf die Längserstreckung A besitzen die freien Schenkel 24 an der vorderen Außenseite der Ankerschiene 1 eine durchgehende Verzahnung 6. Die Verzahnung 6 der Außenseiten der Schenkel 24 erstreckt sich vom Schlitz 5 der Ankerschiene 1 bis etwa zu den Ebenen, in denen auch die Innenwände der Seitenwände 3 liegen.

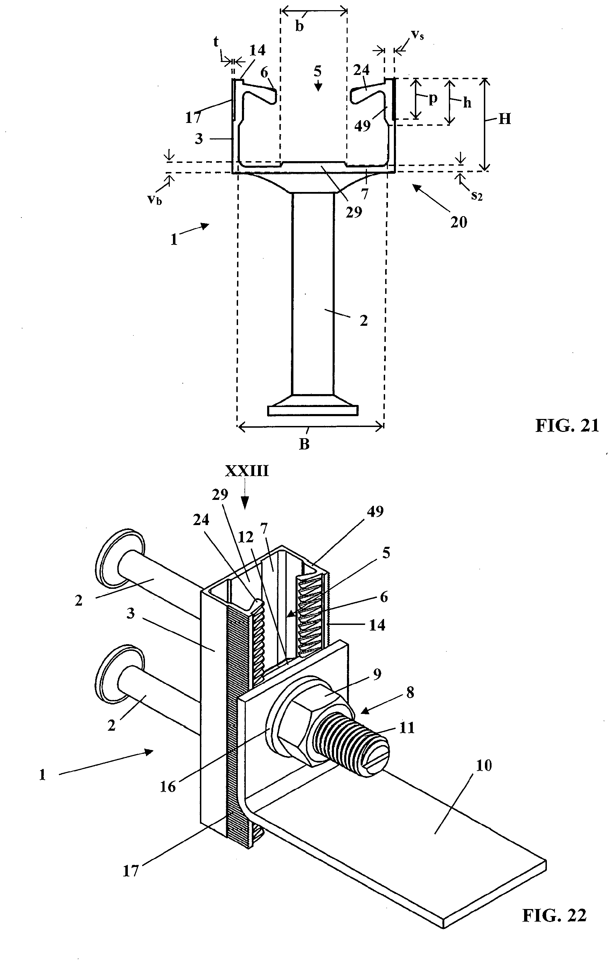

Fig. 21 zeigt eine Ansicht der Ankerschiene aus Fig. 20 von einem Längsende der Ankerschiene 1 aus in Richtung des Pfeils XXI in Fig. 20, also entgegen der in Fig. 20 gekennzeichneten Längsrichtung 200 der Ankerschiene 1. Wie in den Fig. 20 und 21 zu erkennen, weist der Grundkörper 20 der Ankerschiene 1 am Boden 7 eine Bodenverdickung 29 auf. An der verdickten Stelle ist der Boden 7 ungefähr um die Hälfte dicker als an unverdickten Stellen des Grundkörpers 20. Die in Fig. 21 gezeigte Wandstärke v_{b} des Bodens 7 des Grundkörpers 20 im Bereich der Bodenverdickung 29 beträgt ungefähr das 1,5fache der normalen unverdickten Wandstärke s₂ des Grundkörpers 20 der Ankerschiene 1. Die Bodenverdickung 29 ist an der den Ankern 2 abgewandten Seite des Bodens 7, also im Innenraum des U-förmigen Grundkörpers 20, angeordnet. Der Boden 7 besitzt eine in Fig. 21 gekennzeichnete Breite B, die dem Abstand der sich parallel gegenüberliegenden Innenseiten der Seitenwände 3 im Übergangsbereich zwischen Boden 7 und Seitenwänden 3 entspricht. Quer zur Längsrichtung 200 der Ankerschiene 1 und des Bodens 7 erstreckt sich die Bodenverdickung 29 über eine Teilbreite b der gesamten Breite B des Bodens 7. Die Teilbreite b ist ungefähr halb so groß wie die gesamte Breite B des Bodens 7. Die Bodenverdickung 29 ist in der Mitte zwischen den sich parallel gegenüberliegenden Seitenwänden 3 und bezogen auf die Richtung quer zur Längsrichtung 200 der Ankerschiene 1 in der Mitte des Bodens 7 angeordnet. Wie Fig. 20 verdeutlicht, erstreckt sich die Bodenverdickung 29 über die gesamte Längsausdehnung A des Bodens 7.

Die Fig. 20 und 21 zeigen, dass der Grundkörper 20 der Ankerschiene 1 an den Seitenwänden 3 Seitenwandverdickungen 49 aufweist. Die Wandstärke vₛ der Seitenwandverdickung 49 entspricht der Wandstärke v_{b} der Bodenverdickung 29 und beträgt daher wiederum ungefähr das 1,5fache der Wandstärke s₂ des Grundkörpers 20 in unverdickten Bereichen des Grundkörpers 20. Da vₛ und v_{b} in diesem Fall gleich groß sind, kann statt der Bezeichnungen vₛ und v_{b} für die Wandstärken des Grundkörpers 20 im Bereich der Bodenverdickung 29 und im Bereich der Seitenwandverdickung 49 auch eine einzige gemeinsame Bezeichnung, nämlich s₁, verwendet werden. Wie in Fig. 21 dargestellt, besitzen die Seitenwände 3 eine Gesamthöhe H. Die Gesamthöhe H der Seitenwände 3 ist über den Abstand der den Ankern 2 abgewandten Stirnseite 14 einer Seitenwand 3 zu der den Ankern 2 zugewandten Seite des Bodens 7 definiert. Die Seitenwandverdickung 49 erstreckt sich über einen Teil dieser Gesamthöhe H einer Seitenwand 3. Die Seitenwandverdickung 49 erstreckt sich ausgehend von der Stirnseite 14 einer Seitenwand 3 hin zum Boden 3 der Ankerschiene 1 über eine Teilhöhe h der Seitenwand 3. Die Teilhöhe h der Seitenwand entspricht ungefähr der Hälfte der Gesamthöhe H der Seitenwand 3. Wie Fig. 20 zeigt, erstreckt sich die Seitenwandverdickung 49 über die gesamte Längsausdehnung A einer Seitenwand 3. Die Seitenwandverdickung 49 ist auf der Innenseite der Seitenwand 3 angeordnet. Die Innenseite einer Seitenwand 3 ist der parallel gegenüberliegenden anderen Seitenwand 3 zugewandt.

An den Außenseiten der Seitenwände 3 ist eine Profilierung als Seitenwandprofilierung 17 angeordnet. Die Seitenwandprofilierung 17 erstreckt sich über die in Fig. 21 gezeigte Teilhöhe p der Gesamthöhe H einer Seitenwand 3. Die Teilhöhe p beträgt etwas weniger als die Hälfte der Gesamthöhe H der Seitenwand 3 und damit etwas weniger als die Teilhöhe h, über die sich die Seitenwandverdickung 49 erstreckt.

In Richtung der Längsrichtung 200 der Ankerschiene 1 erstrecken sich die Seitenwandprofilierungen 17 über die gesamte Länge A der Längserstreckung der Ankerschiene 1. Die Seitenwandprofilierungen 17 bestehen aus parallel zueinander angeordneten Rillen, die in die nach außen zeigenden Oberflächen der Seitenwände 3 der Ankerschiene 1 eingebracht sind. Wie in Fig. 21 zu erkennen, sind die Seitenwände 3 im Bereich der Seitenwandprofilierungen 17 mit den Seitenwandverdickungen 49 verdickt. Die Wandstärke der Seitenwände 3 beträgt im Bereich der Seitenwandverdickungen 49 ungefähr das 1,5fache der Wandstärke s₂ der Grundkörpers 20 in unverdickten Bereichen des Grundkörpers 20 und ist in Fig. 21 mit vₛ gekennzeichnet. Die Tiefe t der Profilierung der in die Seitenwände eingebrachten Rillen der Seitenwandprofilierung 17 beträgt ungefähr ein Viertel der Wandstärke vₛ der Seitenwände 3 des Grundkörpers 20 in den durch die Seitenwandverdickungen 49 verdickten Bereichen. Die Seitenwandprofilierungen 17 stehen nicht über die ebenen Oberflächen der Seitenwände 3 hervor.

In Fig. 21 ist zu erkennen, dass die Verzahnung 6 der Schenkel 24 in dem dem Schlitz 5 benachbarten Bereich der Schenkel 24 tiefer ist als im weiter vom Schlitz 5 entfernten Bereich der Schenkel 24. Die Länge des Ankers 2 in seiner Längsrichtung beträgt mehr als doppelt so viel wie die Höhe H der Seitenwände 3. Die Höhe H der Seitenwände 3 erstreckt sich in Längsrichtung des Ankers 2. Der Abstand der beiden parallel zueinander verlaufenden Seitenwände 3 beträgt im Bereich des Übergangs zwischen Boden 7 und Seitenwänden 3 in etwa doppelt so viel wie die Breite des Schlitzes 5 und entspricht der Breite B des Bodens 7. Die Breite des Schlitzes 5 ist hierbei der kleinste Abstand der beiden gegenüberliegenden Schenkel 24.

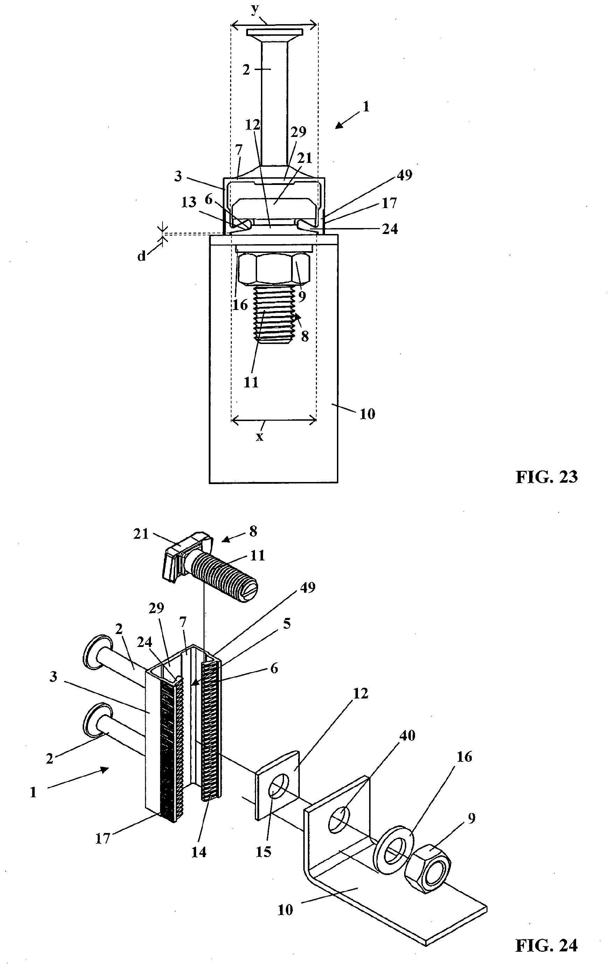

Die Fig. 22 zeigt die perspektivische Darstellung eines Befestigungssystems zur Sicherung einer Kopfschraube 8 innerhalb einer im Beton zu befestigenden Ankerschiene 1. Die Fig. 23 zeigt eine Ansicht des Befestigungssystems aus Fig. 22 von einem Längsende der Ankerschiene 1 aus in Richtung des Pfeils XXIII in Fig. 22, also in Längsrichtung der Ankerschiene 1. Die Fig. 24 zeigt eine Explosionsdarstellung des in den Figuren 22 und 23 gezeigten Befestigungssystems. Die Ankerschiene 1 entspricht in den Figuren 22, 23 und 24 der in der Fig. 20 dargestellten Ankerschiene. Mit Hilfe der Kopfschraube 8 ist ein Gegenstand 10 an der Ankerschiene 1 befestigt. Die Kopfschraube 8 umfasst einen Kopf 21, mit dem sie in der Ankerschiene 1 gehalten wird. Hierbei hintergreift der Kopf 21 der Kopfschraube 8 die Schenkel 24 der Ankerschiene 1. Typischerweise ist die Kopfschraube 8 eine Hammerkopfschraube. Zur Einbringung des Kopfes 21 der Hammerkopfschraube wird die Längsrichtung des Hammerkopfes parallel zur Längsrichtung 200 der Ankerschiene 1 ausgerichtet, so dass der Kopf 21 der Hammerkopfschraube durch den Schlitz 5 der Ankerschiene 1 hindurchgesteckt werden kann. Anschließend wird der Kopf 21 der Hammerkopfschraube um 90° um die Längsachse des Gewindeschafts 11 der Hammerkopfschraube gedreht, so dass eine Entfernung der Hammerkopfschraube aus der Schiene der Ankerschiene 1 durch eine alleinige Bewegung der Hammerkopfschraube in Richtung weg von den Ankern 2 der Ankerschiene 1 nicht möglich ist. Eine solche Bewegung wird durch das Auftreffen der dem Gewindeschaft 11 der Hammerkopfschraube zugewandten Fläche des Kopfes 21 der Hammerkopfschraube auf die den Ankern 2 der Ankerschiene 1 zugewandte innenseitige Oberfläche der freien Schenkel 24 gestoppt. In der beschriebenen Position der Hammerkopfschraube ragt der Gewindeschaft 11 der Hammerkopfschraube aus dem Schlitz 5 der Ankerschiene 1 in Richtung parallel zu den Ankern 2 aus der Ankerschiene 1 hervor. Die Position der Kopfschraube 8 in Längsrichtung 200 der Ankerschiene 1 wird mit Hilfe der Rastungsplatte 12 fixiert.

Wie in der Fig. 24 zu erkennen, weist die Rastungsplatte 12 eine Durchgangsöffnung 15 auf. Der Durchmesser der Durchgangsöffnung 15 ist dem Durchmesser des Gewindeschafts 11 der Kopfschraube 8 angepasst. Der Gewindeschaft 11 der Kopfschraube 8 kann durch die Durchgangsöffnung 15 der Rastungsplatte 12 gesteckt werden. Die Rastungsplatte 12 besitzt zwei sich gegenüberliegende Oberflächen, durch die die Durchgangsöffnung 15 führt. Eine der beiden Oberflächen ist eben ausgebildet. Die andere der beiden Oberflächen weist eine Verzahnung 13 (Fig. 23) auf, die mit der Verzahnung 6 der Ankerschiene 1 korrespondiert. Wie in der Fig. 23 gezeigt, wird zur Fixierung der in der Schiene der Ankerschiene 1 befindlichen Kopfschraube 8 der Gewindeschaft 11 der Kopfschraube 8 durch die Durchgangsöffnung 15 der Rastungsplatte 12 gesteckt. Hierbei wird die Rastungsplatte 12 so auf den Gewindeschaft 11 der Kopfschraube 8 gebracht, dass die die Verzahnung 13 aufweisende Oberfläche der Rastungsplatte 12 in Richtung der Anker 2 der Ankerschiene 1 zeigt. Die Zähne der Verzahnung 13 der Rastungsplatte 12 und der Verzahnung 6 der freien Schenkel 24 der Ankerschiene 1 greifen bei der Fixierung der Kopfschraube 8 mit Hilfe der Rastungsplatte 12 ineinander. Hierbei bildet die unverzahnte, den Ankern 2 abgewandte Oberfläche der Rastungsplatte 12 eine Ebene mit den Stirnseiten 14 der Seitenwände 3 der Ankerschiene 1. Hierzu überragen die Seitenwände 3 der Ankerschiene 1 die freien Schenkel 24 um die Dicke d. Die Dicke d ist die Dicke der beiden sich gegenüberliegenden Ränder der Rastungsplatte 12, die nach der vorgesehenen Positionierung der Rastungsplatte 12 auf den freien Schenkeln 24 der Ankerschiene 1 in Längsrichtung 200 der Ankerschiene 1 verlaufen. Wie in Fig. 23 gezeigt, schließen diese Seitenränder der Rastungsplatte 12 bündig mit den Seitenwänden 3 der Ankerschiene 1 ab.

Die Rastungsplatte 12 ist in diesem Ausführungsbeispiel rechteckig ausgeführt, und der Abstand der sich gegenüberliegenden parallel zueinander verlaufenden Seitenränder der Rastungsplatte 12 wird als Breite x bezeichnet. Die Breite x der Rastungsplatte 12 entspricht dem Abstand y der Innenseiten der Seitenwände 3 der Ankerschiene 1 auf Höhe der an den Seitenwänden 3 angeordneten Schenkel 24. Die Stirnseiten 14 der Seitenwände 3 und die Rastungsplatte 12 bilden so, wie in der Fig. 23 gezeigt, eine bündige ebene Fläche. Auf diese Ebene kann ein zu befestigender Gegenstand 10 aufgebracht werden.

Ein zu befestigender Gegenstand 10 muss eine in Fig. 24 gezeigte Öffnung 40 aufweisen, durch die dieser Gewindeschaft 11 gesteckt werden kann oder in die der Gewindeschaft 11 geschraubt werden kann. In der Fig. 22 ist der Gewindeschaft 11 der Kopfschraube 8 durch eine solche Öffnung 40 eines befestigten Gegenstandes 10 gesteckt und die Kopfschraube 8 mit Hilfe einer Tellerfeder 16 und einer Befestigungsmutter 9 in der Ankerschiene 1 fixiert. Hierzu ist die Befestigungsmutter 9 auf dem Gewindeschaft 11 der Kopfschraube 8 geschraubt. Beim Festschrauben der Befestigungsmutter 9 werden die dem Gewindeschaft 11 zugewandten Oberflächen des Kopfes 21 der Kopfschraube 8 gegen die den Ankern 2 zugewandten Innenflächen der freien Schenkel 24 gedrückt. Gleichzeitig wird die Rastungsplatte 12 gegen die freien Schenkel 24 der Ankerschiene 1 gedrückt. Wie in der Fig. 23 gezeigt, greifen hierbei die Zähne der Verzahnung 13 der Rastungsplatte 12 in die Zähne der Verzahnung 6 der freien Schenkel 24 der Ankerschiene 1. So wird die Position der Kopfschraube 8 endgültig in der Ankerschiene 1 festgelegt. Gleichzeitig wird der Gegenstand 10 an der Ankerschiene 1 befestigt. Wie in den Fig. 22 bis 24 zu erkennen, ist die Rastungsplatte 12 hierbei zwischen dem zu befestigenden Gegenstand 10 und den freien Schenkeln 24 der Ankerschiene 1 angeordnet. Die Rastungsplatte 12 und die Verzahnungen 13 der Rastungsplatte 12 sind so an die Winkelstellung der freien Schenkel 24 und an die Verzahnungen 6 der freien Schenkel 24 angepasst, dass beim Befestigen des Gegenstands 10 mit Hilfe der Kopfschraube 8 und der Befestigungsmutter 9 nahezu die gesamte dem Anker 2 der Ankerschiene 1 zugewandte Fläche der Rastungsplatte 12 formschlüssig auf den Schenkeln 24 der Ankerschiene 1 aufliegt.

Die in den Figuren 22 bis 24 dargestellte Ankerschiene 1 kann gemäß jeder der in den vorangehenden Fig. 1 bis 21 dargestellten Ankerschienen ausgebildet sein. Dabei kann es vorgesehen sein, dass die Form der Rastungsplatte 12 an die Form der Schenkel 4, 24 34 der Ankerschiene 1 angepasst ist. Insbesondere kann die Form der Verzahnung 13 der Rastungsplatte 12 an die Form der Verzahnung 6 der freien Schenkel 4, 24, 34 der Ankerschiene angepasst sein. Hierbei kann vorgesehen sein, dass die beiden Bauteile an ihrer Kontaktfläche formschlüssig ineinandergreifen. Es kann aber auch vorgesehen sein, dass die Zähne der Verzahnungen der Rastungsplatte und die Zähne der Verzahnungen der Schenkel der Ankerschiene lediglich so ausgebildet sind, dass sie unter Bildung von Hohlräumen ineinandergreifen. Weiterhin kann vorgesehen sein, dass die Form der Rastungsplatte 12 an jede beliebige Winkelstellung der freien Schenkel 4, 24, 34 so angepasst ist, dass die Rastungsplatte 12 beim Befestigen eines Gegenstands 10 mit Hilfe einer Kopfschraube 8 und einer Befestigungsmutter 9 formschlüssig auf den Schenkeln 4, 24, 34 der Ankerschiene 1 aufliegt.

## Patentansprüche

1. Ankerschiene zur Verankerung im Beton mit einem im Wesentlichen C-förmigen Querschnitt, wobei die Ankerschiene (1) einen im Querschnitt im Wesentlichen U-förmigen Grundkörper (20), zwei freie Schenkel (4, 24, 34) und mindestens einen Anker (2) umfasst, wobei die zwei freien Schenkel (4, 24, 34) gegenüberliegend zum Anker (2) am Grundkörper (20) angeordnet sind, wobei zwischen den freien Schenkeln (4, 24, 34) ein Schlitz (5) in Längsrichtung (200) der Ankerschiene (1) gebildet ist,
**dadurch gekennzeichnet, dass** der Grundkörper (20) an seiner dem Beton zugewandten Außenseite zumindest teilweise eine Profilierung aufweist, dass die Profilierung durch Ausnehmungen (48) im Grundkörper (20) realisiert ist, und dass der Grundkörper (20) im Bereich der Profilierung verdickt ist, wobei eine Dicke (s₁) des Grundkörpers (20) im Bereich der verdickten Profilierung der größten Wandstärke des Grundkörpers (20) im Bereich der verdickten Profilierung entspricht, wobei eine Dicke (s₂) des Grundkörpers (20) im unverdickten Bereich des Grundkörpers (20) der Wandstärke des Grundkörpers (20) im unverdickten Bereich des Grundkörpers (20) entspricht, und wobei die Dicke (s₁) des Grundkörpers (20) im Bereich der verdickten Profilierung größer ist als die Dicke (s₂) des Grundkörpers (20) im unverdickten Bereich des Grundkörpers (20).

2. Ankerschiene nach Anspruch 1,
**dadurch gekennzeichnet, dass** sich die Profilierung der Ankerschiene (1) über 70% bis 100% der Längserstreckung (A) der Ankerschiene (1) erstreckt.

3. Ankerschiene nach Anspruch 1 oder 2,
**dadurch gekennzeichnet, dass** die Dicke (s₁) des Grundkörpers (20) im Bereich der Profilierung des Grundkörpers (20) und die Tiefe (t) der Profilierung so aufeinander abgestimmt sind, dass die Differenz zwischen der Dicke (s₁) des Grundkörpers (20) im Bereich der Profilierung und der Tiefe (t) der Profilierung der Dicke (s₂) des Grundkörpers (20) im unverdickten Bereich des Grundkörpers (20) entspricht.

4. Ankerschiene nach einem der Ansprüche 1 bis 3,
**dadurch gekennzeichnet, dass** die Dicke (s₁) des Grundkörpers (20) im Bereich der Profilierung des Grundkörpers (20) und die Tiefe (t) der Profilierung so aufeinander abgestimmt sind, dass die Differenz zwischen der Dicke (s₁) des Grundkörpers (20) im Bereich der Profilierung und der Tiefe (t) der Profilierung kleiner als die Dicke (s₂) des Grundkörpers (20) im unverdickten Bereich des Grundkörpers (20) ist.

5. Ankerschiene nach einem der Ansprüche 1 bis 4,
**dadurch gekennzeichnet, dass** der Grundkörper (20) zumindest zwei Seitenwände (3) umfasst, und dass die Profilierung an zumindest einer Seitenwand (3) zumindest über eine Teilprofilierungshöhe (p) der Seitenwand (3) über zumindest einen Teil der Längserstreckung (A) der Ankerschiene (1) als Seitenwandprofilierung (17, 47, 57, 67, 77, 87, 157) angeordnet ist.

6. Ankerschiene nach Anspruch 5,
**dadurch gekennzeichnet, dass** sich die Seitenwandprofilierung (67, 77, 87) über 70% bis 100% der gesamten Höhe (H) der mindestens einen Seitenwand (3) erstreckt.

7. Ankerschiene nach einem der Ansprüche 1 bis 6,
**dadurch gekennzeichnet, dass** der Grundkörper (20) einen Boden (7) umfasst, dass der zumindest eine Anker (2) an dem Boden (7) angeordnet ist, und dass die Profilierung am Boden (7) des Grundkörpers (20) zumindest über eine Teilbreite (b) des Bodens (7) über zumindest einen Teil der Längserstreckung (A) der Ankerschiene (1) als Bodenprofilierung (97, 107, 117, 127, 137, 147) angeordnet ist.

8. Ankerschiene nach Anspruch 7,
**dadurch gekennzeichnet, dass** sich die Bodenprofilierung (127, 137, 147) über 70% bis 100% der gesamten Breite (B) des Bodens (7) erstreckt.

9. Ankerschiene nach einem der Ansprüche 1 bis 8,
**dadurch gekennzeichnet, dass** der Grundkörper (20) zwei Seitenwände (3) und einen Boden (7) umfasst, dass die Seitenwände (3) senkrecht in Bezug auf den Boden (7) angeordnet sind, dass die Seitenwände (3) mit dem Boden (7) Außenkanten bilden, dass die Seitenwände (3) parallel zueinander verlaufen, und dass die dem Anker abgewandten Oberflächen der freien Schenkel (4) auf gleicher Höhe an den dem Boden (7) abgewandten Bereichen der Seitenwände (3) senkrecht zu den Seitenwänden (3) angeordnet sind.

## Claims

1. Anchor rail for anchoring in concrete, having a substantially C-shaped cross-section, wherein the anchor rail (1) comprises a base body (20), which is substantially U-shaped in cross-section, two free legs (4, 24, 34) and at least one anchor (2), wherein the two free legs (4, 24, 34) are arranged at the base body (20) opposite the anchor (2), wherein a slot (8) is formed between the free legs (4, 24, 34) in the longitudinal direction (200) of the anchor rail (1), **characterised in that** the base body (20) at least partially has a profiling on its outside facing the concrete, **in that** the profiling is realised by recesses (48) in the base body (20), and **in that** the base body (20) is thickened in the region of the profiling, wherein a first thickness (s₁) of the base body (20) in the region of the thickened profiling corresponds to the maximum wall thickness of the base body (20) in the region of the thickened profiling, wherein a thickness (s₂) of the base body (20) in the non-thickened region of the base body (20) corresponds to the wall thickness of the base body (20) in the non-thickened region of the base body (20), and wherein the thickness (s₁) of the base body (20) in the region of the thickened profiling is greater than the thickness (s₂) of the base body (20) in the non-thickened region of the base body (20).

2. Anchor rail according to claim 1,
**characterised in that** the profiling of the anchor rail (1) extends along 70% to 100% of the length (A) of the anchor rail (1).

3. Anchor rail according to claim 1 or 2,
**characterised in that** the thickness (s₁) of the base body (20) in the region of the profiling of the base body (20) and the depth (t) of the profiling are matched to each other in such a way that the difference between the thickness (s₁) of the base body (20) in the region of the profiling and the depth (t) of the profiling corresponds to the thickness (s₂) of the base body (20) in the non-thickened region of the base body (20).

4. Anchor rail according to any of claims 1 to 3,
**characterised in that** the thickness (s₁) of the base body (20) in the region of the profiling of the base body (20) and the depth (t) of the profiling are matched to each other in such a way that the difference between the thickness (s₁) of the base body (20) in the region of the profiling and the depth (t) of the profiling is less than the thickness (s₂) of the base body (20) in the non-thickened region of the base body (20).

5. Anchor rail according to any of claims 1 to 4,
**characterised in that** the base body (20) comprises at least two side walls (3), and **in that** the profiling is arranged on at least one side wall (3) at least over a part-profiling height (p) of the side wall (3) along at least a part of the length (A) of the anchor rail (1) as a side wall profiling (17, 47, 57, 67, 77, 78, 157).

6. Anchor rail according to claim 5,
**characterised in that** the side wall profiling (67, 77, 78) extends over 70% to 100% of the overall height (H) of the at least one side wall (3).

7. Anchor rail according to any of claims 1 to 6,
**characterised in that** the base body (20) comprises a base (7), **in that** the at least one anchor (2) is located at the base (7), and **in that** the profiling is arranged at the base (7) of the base body (20) at least over a part-width (b) of the base body (20) along at least a part of the length (A) of the anchor rail (1) as a base profiling (97, 107, 117, 127, 137, 147)

8. Anchor rail according to claim 7,
**characterised in that** the base profiling (127, 137, 147) extends over 70% to 100% of the overall width (B) of the base body (20).

9. Anchor rail according to any of claims 1 to 8,
**characterised in that** the base body (20) comprises two side walls (3) and a base (7), **in that** the side walls (3) are arranged to be perpendicular to the base (7), **in that** the side walls (3) form outer edges with the base (7), **in that** the side walls (3) extend parallel to each other, and **in that** those surfaces of the free legs (4) which are remote from the anchor are arranged at the same level in the regions of the side walls (3) which are remote from the base (7) to be perpendicular to the side walls (3).

## Revendications

1. Rail d'ancrage pour l'ancrage dans le béton, avec une section transversale sensiblement en forme de C, dans lequel le rail d'ancrage (1) comprend un corps de base (20) à section transversale sensiblement en forme de U, deux branches libres (4, 24, 34) et au moins un élément d'ancrage (2), dans lequel les deux branches libres (4, 24, 34) sont disposées sur le corps de base (20) à l'opposé de l'élément d'ancrage (2), dans lequel une fente (5) est formée entre les branches libres (4, 24, 34) dans la direction longitudinale (200) du rail d'ancrage (1),
**caractérisé en ce que** le corps de base (20), sur son côté extérieur tourné vers le béton, présente au moins partiellement un profilage, **en ce que** le profilage est réalisé par des creux (48) dans le corps de base (20), et **en ce que** le corps de base (20) est épaissi dans la zone du profilage, dans lequel une épaisseur (s₁) du corps de base (20) dans la zone du profilage épaissi correspond à l'épaisseur de paroi maximale du corps de base (20) dans la zone du profilage épaissi, dans lequel une épaisseur (s₂) du corps de base (20) dans la zone non épaissie du corps de base (20) correspond à l'épaisseur de paroi du corps de base (20) dans la zone non épaissie du corps de base (20), et dans lequel l'épaisseur (s₁) du corps de base (20) dans la zone du profilage épaissi est supérieure à l'épaisseur (s₂) du corps de base (20) dans la zone non épaissie du corps de base (20).

2. Rail d'ancrage selon la revendication 1,
**caractérisé en ce que** le profilage du rail d'ancrage (1) s'étend sur 70 % à 100 % de l'étendue longitudinale (A) du rail d'ancrage (1).

3. Rail d'ancrage selon la revendication 1 ou 2,
**caractérisé en ce que** l'épaisseur (s₁) du corps de base (20) dans la zone du profilage du corps de base (20) et la profondeur (t) du profilage sont adaptées l'une à l'autre pour que la différence entre l'épaisseur (s₁) du corps de base (20) dans la zone du profilage et la profondeur (t) du profilage corresponde à l'épaisseur (s₂) du corps de base (20) dans la zone non épaissie du corps de base (20).

4. Rail d'ancrage selon l'une des revendications 1 à 3,
**caractérisé en ce que** l'épaisseur (s₁) du corps de base (20) dans la zone du profilage du corps de base (20) et la profondeur (t) du profilage sont adaptées l'une à l'autre pour que la différence entre l'épaisseur (s₁) du corps de base (20) dans la zone du profilage et la profondeur (t) du profilage soit inférieure à l'épaisseur (s₂) du corps de base (20) dans la zone non épaissie du corps de base (20).

5. Rail d'ancrage selon l'une des revendications 1 à 4,
**caractérisé en ce que** le corps de base (20) comprend au moins deux parois latérales (3), et **en ce que** le profilage est disposé sur au moins une paroi latérale (3) au moins sur une hauteur de profilage partielle (p) de la paroi latérale (3) sur au moins une partie de l'extension longitudinale (A) du rail d'ancrage (1) sous la forme d'un profilage de paroi latérale (17, 47, 57, 67, 77, 87, 157).

6. Rail d'ancrage selon la revendication 5,
**caractérisé en ce que** le profilage de paroi latérale (67, 77, 87) s'étend sur 70 % à 100 % de la hauteur totale (H) de la au moins une paroi latérale (3).

7. Rail d'ancrage selon l'une des revendications 1 à 6,
**caractérisé en ce que** le corps de base (20) comprend un fond (7), **en ce que** le au moins un élément d'ancrage (2) est disposé sur le fond (7) et **en ce que** le profilage est disposé sur le fond (7) du corps de base (20) au moins sur une largeur partielle (b) du fond (7) sur au moins une partie de l'extension longitudinale (A) du rail d'ancrage (1) sous la forme d'un profilage de fond (97, 107, 117, 127, 137, 147).

8. Rail d'ancrage selon la revendication 7,
**caractérisé en ce que** le profilage de fond (127, 137, 147) s'étend sur 70 % à 100 % de la largeur totale (B) du fond (7).

9. Rail d'ancrage selon l'une des revendications 1 à 8,
**caractérisé en ce que** le corps de base (20) comprend deux parois latérales (3) et un fond (7), **en ce que** les parois latérales (3) sont disposées perpendiculairement par rapport au fond (7), **en ce que** les parois latérales (3) forment avec le fond (7) des bords extérieurs, **en ce que** les parois latérales (3) s'étendent parallèlement l'une à l'autre, et **en ce que** les surfaces des branches libres (4) opposées à l'élément d'ancrage sont disposées à la même hauteur sur les zones des parois latérales (3) opposées au fond (7) perpendiculairement aux parois latérales (3).
